# EUROPÄISCHE PATENTSCHRIFT

(11) **EP 3 847 946 B1**
(45) Veröffentlichungstag und Bekanntmachung des Hinweises auf die Patenterteilung: **15.11.2023**
(21) Anmeldenummer: 21150352.9
(22) Anmeldetag: 06.01.2021
(51) Int. Cl.: A47L 15/42, A47L 15/48

(54) **GESCHIRRSPÜLMASCHINE, INSBESONDERE HAUSHALTSGESCHIRRSPÜLMASCHINE**
DISHWASHER, IN PARTICULAR A DOMESTIC DISHWASHER
LAVE-VAISSELLE, EN PARTICULIER LAVE-VAISSELLE ÉLECTROMÉNAGER

(30) Priorität: 10.01.2020 DE 102020100433
(43) Veröffentlichungstag der Anmeldung: 14.07.2021
(73) Patentinhaber: Miele & Cie. KG, 33332 Gütersloh (DE)
(72) Erfinder: Chluba, Nils, 31688 Nienstädt (DE); Schröder, Nils, 33611 Bielefeld (DE); Kornfeld, André, 33378 Rheda-Wiedenbrück (DE); Steinmeier, Ralph, 32052 Herford (DE); Dahms, Tobias, 30519 Hannover (DE); Runau, Benjamin, 33611 Bielefeld (DE)

(56) Entgegenhaltungen:
- EP-A1- 2 728 052
- EP-A1- 3 375 345
- WO-A1-2018/188883
- WO-A1-2018/215331
- WO-A1-2019/233809
- CN-A- 108 670 162
- DE-A1-102013 101 861
- DE-A1-102018 118 606

## Beschreibung

Die Erfindung betrifft eine Geschirrspülmaschine, insbesondere eine Haushaltsgeschirrspülmaschine, mit einem einen Spülraum bereitstellenden Spülbehälter, der der Aufnahme von zu reinigendem Spülgut dient, und einer Wärmepumpeneinrichtung mit einem Verdampfer, der eine von einem Arbeitsmittel durchströmbare Rohrschlange aufweist, die innerhalb eines mit Wasser befüllten Tanks angeordnet ist, wobei der Tank eine an einen Luftzuführungskanal angeschlossene Luftzuführungsöffnung und eine an einen Luftabführungskanal angeschlossene Luftabführungsöffnung aufweist, wobei ein sich innerhalb des Tanks erstreckender Luftführungsweg vorgesehen ist, der die Luftabführungsöffnung mit der Luftzuführungsöffnung strömungstechnisch verbindet. Des Weiteren betrifft die Erfindung ein Verfahren zum Betrieb einer Geschirrspülmaschine.

Eine gattungsgemäße Geschirrspülmaschine ist aus der EP 3 375 345 A1 bekannt.

Eine Geschirrspülmaschine der vorbekannten Art verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beladung einer Geschirrspülmaschine mit Spülgut kommt in der Regel ein Spülgutträger zum Einsatz, der durch die Beschickungsöffnung hindurch verfahren werden kann, und zwar entweder in den Spülraum hinein oder aus diesem heraus, je nach Verfahrbewegungsrichtung. Dabei verfügt eine Geschirrspülmaschine typischerweise über zwei oder drei Spülgutträger, je nach Bauform. In der Regel sind die Spülgutträger als Spülkörbe ausgebildet, wobei gemäß einer typischen Bauform ein Unterkorb, ein in Höhenrichtung der Geschirrspülmaschine darüber angeordneter Oberkorb sowie optional eine in Höhenrichtung oberhalb des Oberkorbs angeordnete Besteckschublade vorgesehen sind.

Die aus der eingangs genannten EP 3 375 345 A1 bekannte Geschirrspülmaschine verfügt des Weiteren über eine Wasser-Wasser-Wärmepumpeneinrichtung mit einem Verdampfer, der eine Rohrschlange aufweist, die innerhalb eines mit Wasser befüllten Tanks angeordnet ist. Der Tank ist an einen Luftzuführungskanal und an einen Luftabführungskanal strömungstechnisch angeschlossen, welche Kanäle anderendseitig in den Spülraum einmünden. Im Betriebsfall kann so über den Luftzuführungskanal Luft aus dem Spülraum heraus in den Tank gefördert werden. Dort gelangt die Luft in unmittelbaren Kontakt mit dem vom Tank bevorrateten Wasser. Der Luftabführungskanal dient dazu, aus dem Tank stammende Luft zurück in den Spülraum zu fördern. Im Ergebnis ist so ein Umluftkreislauf geschaffen, der im Betriebsfall eine Luftumwälzung gestattet, und zwar aus dem Spülraum heraus durch den Luftzuführungskanal in den Tank hinein und von dort aus durch den Luftabführungskanal zurück in den Spülraum.

In vorteilhafter Weise ermöglichen diese nach der EP 3 375 345 A1 vorgesehenen Luftführungskanäle eine Wärmeenergieübertragung von der im Spülbehälter befindlichen Luft auf das im Tank der Wärmepumpeneinrichtung bevorratete Wasser. Im Betriebsfall kann damit Wärmeenergie aus der vom Spülbehälter beherbergten Luft auf das im Tank bevorratete Wasser übertragen werden, was nach einem bestimmungsgemäßen Verwendungseinsatz der Wärmepumpeneinrichtung einer beschleunigten Regeneration des Wassers dient.

Obgleich sich die aus der EP 3 375 345 A1 vorbekannte Konstruktion bewährt hat, besteht Verbesserungsbedarf. So ist es insbesondere angestrebt, im bestimmungsgemäßen Verwendungsfall der Geschirrspülmaschine einen ordnungsgemäßen Betrieb der Wärmepumpeneinrichtung gewährleisten zu können. Denn auch im bestimmungsgemäßen kann sich die folgende Problematik einstellen.

Die Wärmepumpeneinrichtung nach der EP 3 375 345 A1 verfügt in an sich bekannter Weise über einen Verdampfer, einen Verdichter, einen Verflüssiger, ein Expansionsorgan und einen diese Baukomponenten strömungstechnisch miteinander verbindenden Strömungskreislauf. Innerhalb des Strömungskreislaufs ist ein Arbeitsmittel, auch Kältemittel genannt, geführt. Im bestimmungsgemäßen Verwendungsfall der Wärmepumpeneinrichtung wird dem Arbeitsmittel mittels des Verflüssigers Wärme entzogen und auf die Spülflotte übertragen. Nach einem Durchströmen des Verflüssigers passiert das Arbeitsmittel das Expansionsorgan, infolge dessen das Arbeitsmittel auf ein niedrigeres Druckniveau gebracht wird. Da das Arbeitsmittel in diesem Zustand deutlich kälter als die Umgebungstemperatur ist, kann es im nachfolgenden Verdampfer Wärme aus der Umgebung aufnehmen, bevor es anschließend zum Verdichter und alsdann zum Verflüssiger geführt wird.

Für die Funktion der Wärmepumpeneinrichtung ist es von wesentlicher Bedeutung, dass das Arbeitsmittel vollständig feuchtigkeitsfrei in den Verdichter gelangt. Flüssigkeitsrückstände auch in Form kleinster Tropfen können zu einem Defekt des Verdichters führen. Aus diesem Grunde ist dafür Sorge zu tragen, dass im Verdampfer eine vollständige Verdampfung des dem Verdampfer im flüssigen Zustand zugeführten Arbeitsmittels stattfindet, was nur durch eine zielgerichtete Überhitzung des Arbeitsmittels sichergestellt werden kann.

Bei einer Wasser-Wasser-Wärmepumpeneinrichtung, wie Sie aus der EP 3 375 345 A1 bekannt ist, kann das vom Tank bevorratete Wasser so stark abkühlen, dass es einfriert. Eine Überhitzung des Arbeitsmittels kann dann nicht mehr sichergestellt werden. Hieran ändert auch nichts der strömungstechnische Anschluss des Tanks an einen Luftzuführungskanal und einen Luftabführungskanal, denn der Eintrag von Luft in den Tank soll dazu dienen, das vom Tank bevorratete Wasser schneller wieder zu regenerieren, das heißt eine Luftzuführung findet erst dann statt, wenn das vom Tank bevorratete Wasser bereits ausgekühlt und sogar eingefroren ist.

Die DE 10 2018 118 606 A1 offenbart eine Geschirrspülmaschine mit einer Wasser-Wasser-Wärmepumpeneinrichtung, mit einem innerhalb eines Wassertanks angeordneten Verdampfers.

Die DE 10 2013 101 861 A1 offenbart eine Geschirrspülmaschine mit einer Luft-Wasser-Wärmepumpeneinrichtung, welche ein Gebläse aufweist, mit dem Rohrschlangen des Verdampfers der Wärmepumpe, in denen das Arbeitsmittel im Strömungskreislauf der Wärmepumpeneinrichtung geführt wird, mit Umgebungsluft beaufschlagt werden.

Die WO 2019/233809 A1 offenbart ebenfalls eine Geschirrspülmaschine mit einer Luft-Wasser-Wärmepumpeneinrichtung, welche ein Gebläse aufweist, mit dem Rohrschlangen des Verdampfers der Wärmepumpe, in denen das Arbeitsmittel im Strömungskreislauf der Wärmepumpeneinrichtung geführt wird, mit Umgebungsluft beaufschlagt werden. Dabei weist der Verdampfer außerdem Lamellen auf, die sich in einen Wassertank erstrecken.

Es ist deshalb ausgehend vom Vorbeschriebenen die **Aufgabe** der Erfindung, eine Geschirrspülmaschine der eingangs genannten Art vorzuschlagen, die konstruktiv einen funktionssichereren Betrieb der Wärmepumpeneinrichtung gestattet. Zudem soll ein Verfahren zum Betrieb einer solchen Geschirrspülmaschine vorgeschlagen werden.

Zur **Lösung** dieser Aufgabe wird geschirrspülmaschinenseitig eine Geschirrspülmaschine der eingangs genannten Art vorgeschlagen, die sich dadurch auszeichnet, dass die Rohrschlange einen innerhalb des Luftführungswegs angeordneten Abschnitt aufweist.

In Abkehr zum Stand der Technik wie er beispielsweise durch die EP 3 375 345 A1 gegeben ist, wird mit der erfindungsgemäßen Ausgestaltung vorgeschlagen, dass die Rohrschlange des Verdampfers nicht vollständig vom im Tank bevorrateten Wasser bedeckt ist. Vielmehr ist ein Teilabschnitt der Rohrschlange im Luftführungsweg und damit oberhalb des Wasserspiegels des vom Tank bevorrateten Wassers angeordnet.

Es sind so zwei Temperaturzonen geschaffen. Die erste Temperaturzone ist durch das Teilvolumen des Tanks gegeben, das mit Wasser befüllt ist. Dementsprechend ergibt sich die Temperatur der ersten Temperaturzone durch die herrschende Wassertemperatur. Die zweite Temperaturzone ist durch das Teilvolumen des Tanks gegeben, das nicht mit Wasser, sondern mit Luft befüllt ist. Die Temperatur dieser Temperaturzone ist durch die Lufttemperatur gegeben. Dabei befindet sich schwerkraftbedingt die zweite Temperaturzone in Höhe der Geschirrspülmaschine oberhalb der ersten Temperaturzone.

Von erfindungswesentlicher Bedeutung ist nun, dass sich die Rohrschlange des Verdampfers durch beide Temperaturzonen erstreckt, das heißt nicht nur innerhalb des mit Wasser befüllten ersten Teilvolumens, sondern auch innerhalb des mit Luft befüllten zweiten Teilvolumens angeordnet ist. Dabei ist das zweite Teilvolumen durch den Luftführungsweg gegeben, der die Luftabführungsöffnung mit der Luftzuführungsöffnung strömungstechnisch verbindet.

Die erfindungsgemäße Konstruktion stellt in vorteilhafter Weise im Betriebsfall der Wärmepumpeneinrichtung eine Überhitzung des Arbeitsmittels und damit eine ordnungsgemäße Funktion der Wärmepumpeneinrichtung wie folgt sicher.

Zu Beginn eines Betriebs der Wärmepumpeneinrichtung weist das vom Tank bevorratete Wasser Umgebungstemperatur auf, ebenso wie die sich im Tank oberhalb des Wasserspiegels befindliche Luft. Das im Strömungskreislauf der Wärmepumpeneinrichtung geführte Arbeitsmittel durchströmt die Rohrschlange des Verdampfers und wird hierbei zunächst durch das mit Wasser befüllte Teilvolumen des Tanks geführt, bevor es in das mit Luft befüllte Teilvolumen des Tanks gelangt.

Im weiteren Betrieb der Wärmepumpeneinrichtung kommt es nun zu einer Auskühlung des vom Tank bevorrateten Wassers durch Wärmeentzug, indem aus dem Wasser stammende Wärmeenergie auf das durch die Rohrschlange des Verdampfers geführte Arbeitsmittel übertragen wird. Durch den innerhalb des Tanks verlaufenden Luftführungsweg wird indes über die angeschlossenen Luftführungs- und Luftabführungskanäle vergleichsweise warme Umgebungsluft geführt, infolge dessen die beiden schon vorstehend genannten Temperaturzonen entstehen, nämlich die Wassertemperaturzone einerseits und die Lufttemperaturzone andererseits.

Aufgrund der höheren Temperatur in der zweiten Temperaturzone, das heißt aufgrund der im Luftführungsweg herrschenden Umgebungstemperatur ist eine effiziente Überhitzung des durch die Rohrschlange des Verdampfers geführten Arbeitsmittels gegeben. Der Längenanteil der Rohrschlange in Durchströmungsrichtung, der für die Überhitzung des Arbeitsmittels benötigt wird, reduziert sich hierdurch und die Verdampfungstemperatur des Arbeitsmittels erhöht sich, so dass die Gesamteffizienz des Verdampfers und damit der gesamten Wärmepumpeneinrichtung erhöht ist. Darüber hinaus wird insbesondere sichergestellt, dass das den Verdampfer verlassende Arbeitsmittel vollständig verdampft ist, eine Beschickung des Verdichters mit noch nicht verdampften Flüssigkeitsrückständen sicher vermieden ist.

Gemäß einem weiteren Merkmal der Erfindung ist vorgesehen, dass der Luftführungsweg ein Luftpolster oberhalb des vom im Tank bevorrateten Wasser bereitgestellten Wasserspiegels ist.

Demnach ist vorgesehen, dass sich die im bestimmungsgemäßen Verwendungsfall ausbildenden Temperaturzonen nicht konstruktiv voneinander getrennt sind, sondern sich einfach dadurch ergeben, dass der Tank nicht vollständig, sondern nur bis zu einer gewissen Pegelhöhe mit Wasser befüllt ist. Es ist so ein oberhalb des Wasserspiegels des vom Tank bevorrateten Wassers befindliches Luftpolster gegeben. Durch dieses Luftpolster führt der Luftführungsweg, was konstruktiv dadurch erreicht ist, dass die Luftzuführungsöffnung und die Luftabführungsöffnung oberhalb des Wasserspiegels ausgebildet sind. Dabei durchläuft die Rohrschlange des Verdampfers beide Teilvolumen des Tanks, ist also mit einem ersten Abschnitt innerhalb des Wassers und mit einem zweiten Abschnitt außerhalb des Wassers und damit innerhalb des Luftführungswegs angeordnet.

Gemäß einem weiteren Merkmal der Erfindung ist vorgesehen, dass der Tank einen die Höhe des Wasserspiegels des vom Tank bevorrateten Wassers begrenzenden Überlauf aufweist.

Die Höhe des Wasserstandes innerhalb des Tanks kann sich auch im bestimmungsgemäßen Betrieb einer Wärmepumpeneinrichtung ändern. So kann es beispielsweise zu Kondensatbildung an dem im Luftführungsweg angeordneten Rohrschlangenabschnitt kommen. Gegebenenfalls ist es auch konstruktiv vorgesehen, den Wasserpegel wahlweise variabel einstellen zu können. Mit dem erfindungsgemäß vorgesehenen Überlauf ist jedenfalls sichergestellt, dass die Höhe des Wasserspiegels des vom Tank bevorrateten Wassers nicht über ein vorgegebenes Höhenmaß hinaus ansteigt. Eine unbeabsichtigte vollständige Flutung des Tanks mit Wasser ist damit ausgeschlossen, so dass auch in jedem Fall ein Luftpolster oberhalb des Wasserspiegels gegeben ist.

In einer Weiterbildung der Erfindung kann vorgesehen sein, dass der Überlauf an eine Verbindungsleitung angeschlossen ist, die in den Spülraum der Geschirrspülmaschine einmündet. Erforderlichenfalls kann in eine solche Verbindungsleitung auch eine Pumpe integriert sein.

Gemäß einem weiteren Merkmal der Erfindung ist vorgesehen, dass die Höhe des Wasserpegels des vom Tank bevorrateten Wassers variabel einstellbar ist. Eine solche Wasserspiegel- bzw. Pegeleinstellung ist insbesondere zu Beginn eines Betriebs der Wärmepumpeneinrichtung sinnvoll. Denn zu Beginn eines solchen Betriebs herrscht in beiden Temperaturzonen die gleiche Temperatur, nämlich Umgebungstemperatur. Da die Wärmeenergieübertragung aus Wasser auf das Arbeitsmittel größer ist als die Wärmeenergieübertragung aus Luft auf das Arbeitsmittel, ist es sinnvoll, zu Beginn eines Betriebs der Wärmepumpeneinrichtung den Tank soweit mit Wasser zu befüllen, das heißt den Wasserspiegel soweit anzuheben, dass die Rohrschlange des Verdampfers möglichst vollständig von Wasser umgeben ist. Sobald dann im weiteren Betrieb der Wärmepumpeneinrichtung die Wassertemperatur soweit absinkt, dass eine Überhitzung des Arbeitsmittels nicht mehr sicher gewährleistet werden kann, erfolgt eine Absenkung des Wasserspiegels, so dass sich in schon vorbeschriebener Weise oberhalb des Wasserspiegels ein Luftpolster ausbildet, das den Luftführungsweg bereitstellt, durch den hindurch dann Luft mit Umgebungstemperatur geführt werden kann. Sofern der Tank mit einem Überlauf ausgerüstet ist, ist dieser für die wahlweise Anhebung des Wasserspiegels zu verschließen.

Gemäß einem weiteren Merkmal der Erfindung ist ein Sensor zur Detektion der Höhe des Wasserspiegels des vom Tank bevorrateten Wassers vorgesehen. Mittels dieses Sensors ist sichergestellt, dass der für einen ordnungsgemäßen Betrieb der Wärmepumpeneinrichtung einzuhaltende Wasserspiegel eingestellt ist.

Gemäß einem weiteren Merkmal der Erfindung ist vorgesehen, dass der Tank an eine Wasserpumpe strömungstechnisch angeschlossen ist. Im Bedarfsfall kann so mittels der Wasserpumpe Wasser aus dem Tank abgepumpt und beispielsweise dem Spülraum der Geschirrspülmaschine zugeleitet werden.

Gemäß einem weiteren Merkmal der Erfindung ist eine Ventilatoreinheit vorgesehen, die mit dem Luftzuführungskanal und dem Luftabführungskanal in strömungstechnischer Wirkverbindung steht. Mittels dieser Ventilatoreinheit wird im Betriebsfall Umgebungsluft gefördert, das heißt der die Geschirrspülmaschine umgebenden Atmosphäre entnommen und dem Tank durch den Luftzuführungskanal zugeführt. Innerhalb des Tanks durchströmt die zugeführte Luft den Luftführungsweg und gelangt nach einem Passieren desselben über den Luftführungskanal zurück in die Umgebungsatmosphäre.

Gemäß einem weiteren Merkmal der Erfindung ist vorgesehen, dass der Luftzuführungskanal eingangsseitig eine Öffnung bereitstellt, die frontseitig oder rückseitig der Geschirrspülmaschine ausgebildet ist. In Entsprechung hierzu ist vorgesehen, dass der Luftabführungskanal ausgangsseitig eine Öffnung bereitstellt, die frontseitig oder rückseitig der Geschirrspülmaschine ausgebildet ist. Die Umgebungsluft kann mithin entweder frontseitig oder rückseitig angesaugt und alsdann entweder rückseitig oder vorderseitig wieder ausgeblasen werden. Auch ist es natürlich möglich, die Umgebungsluft sowohl rückseitig anzusaugen und auszublasen als auch die Luft frontseitig anzusaugen und auszublasen.

Gemäß einem weiteren Merkmal der Erfindung ist ein Abzweigungskanal vorgesehen, der an einen Luftabführungskanal strömungstechnisch angeschlossen ist. Damit kann über den Luftabführungskanal abgeführte Luft entweder ausgeblasen oder in den strömungstechnisch an den Luftabführungskanal angeschlossenen Abzweigungskanal eingeleitet werden. Um eine wahlweise Beschickung des Abzweigungskanals mit abgegebener Luft zu ermöglichen, ist erfindungsgemäß eine Verschlussklappe vorgesehen, die zur strömungstechnischen Anbindung des Abzweigungskanals an den Luftabführungskanal wahlweise geöffnet oder geschlossen werden kann.

Gemäß einem weiteren Merkmal der Erfindung ist vorgesehen, dass der Abzweigungskanal ausgangsseitig eine Öffnung aufweist, die oberhalb einer frontseitig der Geschirrspülmaschine vom Spülraum bereitgestellten Beschickungsöffnung ausgebildet ist. Es ist so gestattet, aus dem Tank stammende Luft unterseitig einer die Geschirrspülmaschine oberseitig abdeckenden Arbeitsplatte abzugeben. Dies ermöglicht eine Vorwärmung der Arbeitsplatte, was Kondensatbildung unterhalb der Arbeitsplatte vermeiden hilft, insbesondere für den Fall, dass nach ordnungsgemäßer Beendigung eines Spülprogramms die Geschirrspülmaschine geöffnet wird und etwaiger sich in der Geschirrspülmaschine befindlicher Restwasserdampf austritt.

Verfahrensseitig wird zur Lösung der vorstehenden Aufgabe ferner vorgeschlagen ein Verfahren zum Betrieb einer Geschirrspülmaschine der vorerläuterten Art, bei dem im Betriebsfall der Wärmepumpeneinrichtung dem Tank Luft zugeführt und entlang des Luftführungswegs oberhalb des Wasserspiegels des vom Tank bevorrateten Wassers durch den Tank geleitet wird.

Diese erfindungsgemäße Verfahrensdurchführung erbringt den Vorteil, dass der im Luftführungsweg angeordnete Rohrschlangenabschnitt des Verdampfers mit auf Umgebungstemperatur aufgeheizter Luft beaufschlagt wird, womit eine bestimmungsgemäße Überhitzung des durch die Rohrschlange hindurchgeführten Arbeitsmittels sichergestellt ist. Damit ist so auch erreicht, dass eine ungewollte Beschickung des dem Verdampfer in Durchströmungsrichtung des Arbeitsmediums nachfolgenden Verdichters mit noch nicht vollständig verdampftem Arbeitsmittel unterbunden ist.

Gemäß einem weiteren Merkmal der Erfindung ist vorgesehen, dass der Wasserspiegel vor einer Beaufschlagung des Tanks mit Luft zur Freigabe des Luftführungswegs abgesenkt wird.

Gemäß einer besonderen Ausführungsform der Erfindung kann vorgesehen sein, zu Beginn eines Betriebs der Wärmepumpeneinrichtung den Tank mit Wasser soweit zu befüllen, dass die Rohrschlange des Verdampfers vollständig von Wasser bedeckt ist. Dies deshalb, weil ein größerer Wärmeeintrag aus Wasser als aus Luft auf das Arbeitsmittel gegeben ist. Bevor dann das Wasser infolge der sich einstellenden Abkühlung zu weit abkühlt, wird zur Sicherstellung der wünschenswerterweise zu erreichenden Überhitzung des Arbeitsmittels der Wasserspiegel wieder abgesenkt, und zwar so weit, dass die Rohrschlange des Verdampfers zumindest abschnittsweise innerhalb eines mit Luft befüllten Luftführungswegs angeordnet ist.

Gemäß einem weiteren Merkmal der Erfindung ist vorgesehen, dass die Höhe des Wasserspiegels des vom Tank bevorrateten Wassers sensiert wird. Es findet insoweit eine Wasserstandskontrolle statt.

Aufgrund der Abkühlung der Raumluft kondensiert Feuchtigkeit aus der Luft an der Wasseroberfläche und an der Rohrschlange des Verdampfers aus. Dieses Kondensat führt zu einem Anstieg des Füllstandes im Tank. Um einen kritischen Anstieg des Wasserpegels zu vermeiden, ist der Wasserstand entweder durch einen Überlauf begrenzt oder durch eine Pumpe gezielt einzustellen. Letzteres macht den Einsatz eines entsprechenden Sensors erforderlich. Die Sensierung des Wasserpegels macht es im Übrigen möglich, eine variable Regelung des Wasserstandes vorzusehen, was folgende Vorteile bietet.

Im bestimmungsgemäßen Verwendungsfall der Geschirrspülmaschine erfolgt ein Betrieb der Wärmepumpeneinrichtung zumeist instationär. Um auf den unterschiedlichen Wärmebedarf zur Spülflottenaufheizung zu reagieren, können die infolge der erfindungsgemäßen Ausgestaltung gebildeten Temperaturzonen durch die Einstellung des Wasserspiegels gezielt eingesteuert werden.

In schon vorerläuterter Weise kann zu Beginn eines Betriebs der Wärmepumpeneinrichtung der Wasserspiegel im Tank so weit angehoben werden, dass die Rohrschlange des Verdampfers vollständig bedeckt ist. Damit wird die Effizienz der Wärmepumpeneinrichtung zu Betriebsbeginn erhöht.

Auch bei einem kompletten Durchfrieren des Wassertanks steht ein Ausdehnungsvolumen für die Dichteänderung zur Verfügung, was dem Bauteilschutz dient.

Ein weiterer Vorteil der Raumluftführung durch den mit Wasser gefüllten Tank ist die Erhöhung der Oberflächentemperatur auf der Tankoberseite. Hierdurch kann eine Wärmedämmung zur Vermeidung einer unkontrollierten Betauung erreicht werden.

Weitere Merkmale und Vorteile der Erfindung ergeben sich aus der nachfolgenden Beschreibung anhand der Figuren. Dabei zeigen
- Fig. 1: in schematischer Darstellung eine erfindungsgemäße Geschirrspülmaschine gemäß einer ersten Ausführungsform;
- Fig. 2: in schematischer Darstellung eine erfindungsgemäße Geschirrspülmaschine gemäß einer zweiten Ausführungsform;
- Fig. 3: in schematischer Darstellung eine erfindungsgemäße Geschirrspülmaschine gemäß einer dritten Ausführungsform;
- Fig. 4: in schematisch perspektivischer Ansicht ausschnittsweise die Geschirrspülmaschine nach Fig. 3;
- Fig. 5: in schematischer Darstellung ausschnittsweise einen Tank der erfindungsgemäß ausgebildeten Geschirrspülmaschine in einer ersten Darstellung;
- Fig. 6: in schematischer Darstellung ausschnittsweise einen Tank der erfindungsgemäß ausgebildeten Geschirrspülmaschine in einer zweiten Darstellung;
- Fig. 7: in schematischer Ansicht die Ausgestaltung einer erfindungsgemäßen Rohrschlange in einer Ansicht von oben gemäß einer ersten Ausführungsform;
- Fig. 8: in schematischer Ansicht die Ausgestaltung einer erfindungsgemäßen Rohrschlange in einer Ansicht von oben gemäß einer zweiten Ausführungsform;
- Fig. 9: in einer schematischen Frontansicht die Rohrschlange nach Fig. 8;
- Fig. 10: in schematischer Perspektivdarstellung die Rohrschlange nach Fig. 8;
- Fig. 11: in schematischer Darstellung eine erfindungsgemäße Geschirrspülmaschine gemäß einer weiteren Ausführungsform;
- Fig. 12: in schematischer Darstellung ein Tank der erfindungsgemäßen Geschirrspülmaschine gemäß einer weiteren Ausführungsform;
- Fig. 13: in schematischer Darstellung ein Tank der erfindungsgemäßen Geschirrspülmaschine gemäß einer weiteren Ausführungsform;
- Fig. 14: in schematischer Darstellung ein Tank der erfindungsgemäßen Geschirrspülmaschine gemäß einer weiteren Ausführungsform;
- Fig. 15: der Tank nach Fig. 14 bei abgesenktem Wasserspiegel;
- Fig. 16: in schematischer Darstellung eine erfindungsgemäße Geschirrspülmaschine gemäß einer weiteren Ausführungsform;
- Fig. 17: die Geschirrspülmaschine nach Fig. 16 bei geöffneten Verschlussklappen;
- Fig. 18: in schematischer Darstellung eine erfindungsgemäße Geschirrspülmaschine gemäß einer weiteren Ausführungsform;
- Fig. 19: Geschirrspülmaschine nach Fig. 18 bei geöffnetem Abzweigungskanal;
- Fig. 20: in schematischer Darstellung eine erfindungsgemäße Geschirrspülmaschine gemäß einer weiteren Ausführungsform und
- Fig. 21: in schematischer Darstellung eine Geschirrspülmaschine nach dem Stand der Technik.

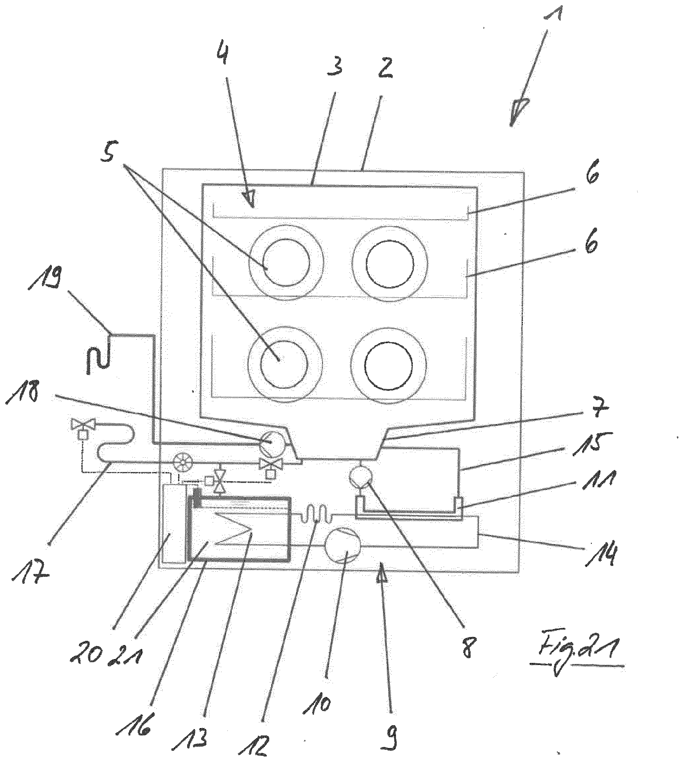

Fig. 21 lässt in rein schematischer Darstellung eine Geschirrspülmaschine 1 erkennen, wie sie aus dem Stand der Technik bekannt ist, so zum Beispiel aus der EP 3 375 345 A1.

Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist.

Im gezeigten Ausführungsbeispiel dienen zur Aufnahme des zu reinigenden Spülguts 5 Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an den eine Umwälzpumpe 8 strömungstechnisch angeschlossen ist. Über entsprechende und in der Figur ebenfalls nicht dargestellte Versorgungsleitungen ist die Sprüheinrichtung an die Umwälzpumpe 8 strömungstechnisch angeschlossen. Zudem ist der Sammeltopf 7 unter Zwischenschaltung einer Pumpe 18 an eine Abwasserleitung 19 und an eine Frischwasserleitung 17 strömungstechnisch angeschlossen.

Die Geschirrspülmaschine 1 verfügt des Weiteren über eine Wärmepumpeneinrichtung 9. Diese weist einen Verdichter 10, einen Verflüssiger 11, ein Expansionsorgan 12, einen Verdampfer 13 sowie einen diese Baukomponenten strömungstechnisch miteinander verbindenden Strömungskreislauf 14 auf, in dem ein Arbeitsmittel, auch Kältemittel genannt, geführt ist.

Der Verdampfer 13 ist innerhalb eines Tanks 16 angeordnet, der mit Wasser 21 als Wärmeträgermedium befüllt ist. Damit ist die Wärmepumpeneinrichtung 9 als sog. Wasser-Wasser-Wärmepumpeneinrichtung ausgebildet.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 umgewälzten Arbeitsmittel auf die Spülflotte statt. Zu diesem Zweck ist ein an die Umwälzpumpe 8 angeschlossener Umwälzkreislauf 15 vorgesehen, der der Spülflottenumwälzung dient. Die im Betriebsfall im Verflüssiger 11 durch Verflüssigung des Arbeitsmittels frei werdende Wärmeenergie wird mithin auf die im Umwälzkreislauf 15 umgewälzte Spülflotte übertragen, zu welchem Zweck der Verflüssiger über einen entsprechend ausgebildeten Wärmetauscher verfügt.

Des Weiteren ist noch eine Steuerung 20 vorgesehen, mittels welcher unter anderem die Füllstandshöhe des Wassers 21 innerhalb des Tanks 16 sensiert und im Bedarfsfall eingestellt werden kann.

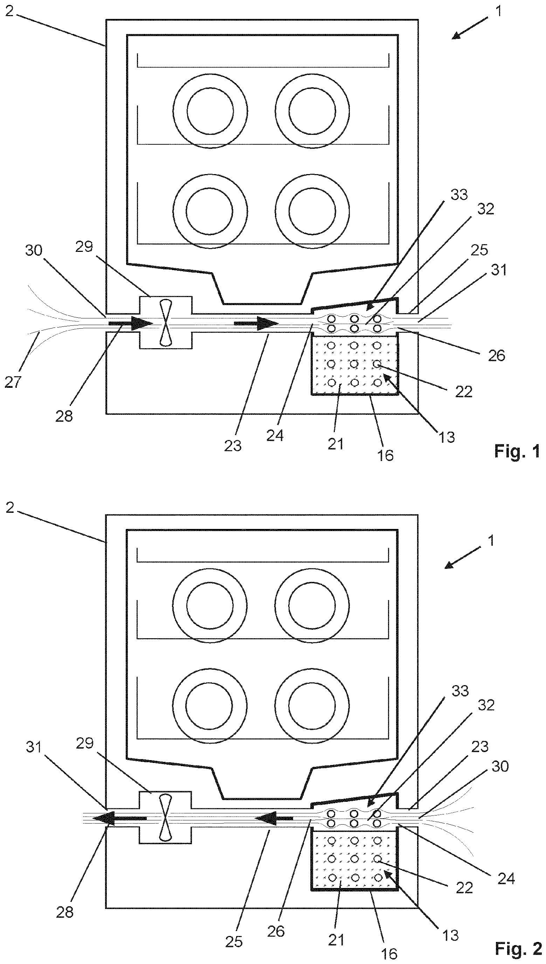

Wie sich aus der Darstellung nach Fig. 21 ergibt, ist nach dem Stand der Technik vorgesehen, dass die vom Verdampfer 13 bereitgestellte Rohrschlange vollständig von dem vom Tank 16 bevorrateten Wasser 21 bedeckt ist. Erfindungsgemäß wird in Abkehr hierzu vorgeschlagen, dass die Rohrschlange 22 einen Abschnitt aufweist, der innerhalb eines vom Tank 16 bereitgestellten Luftführungswegs 32 angeordnet ist. Diese erfindungsgemäße Ausgestaltung ist in unterschiedlichen Ansichten in den Figuren 1 bis 20 anhand unterschiedlicher Ausführungsbeispiele dargestellt.

Wie die Darstellung nach Fig. 1 erkennen lässt, verfügt die erfindungsgemäß ausgebildete Geschirrspülmaschine 1 über einen Luftzuführungskanal 23 einerseits und einen Luftabführungskanal 25 andererseits. Dabei ist der Luftzuführungskanal 23 an eine Luftzuführungsöffnung 24 des Tanks 16 und der Luftabführungskanal 25 an eine Luftabführungsöffnung 26 des Tanks 16 strömungstechnisch angeschlossen. In den Luftzuführungskanal 23 ist zudem eine Ventilatoreinheit 29 integriert. Im bestimmungsgemäßen Verwendungsfall fördert die Ventilatoreinheit 29 Luft 27, und zwar durch eine Eingangsöffnung 30 durch den Lufzutführungskanal 23 in den Tank 16 und von dort aus durch den Luftabführungskanal 25 hindurch bis zur Ausgangsöffnung 31, und zwar in Entsprechung der eingezeichneten Pfeile 28.

Innerhalb des Tanks 16 ist der Luftführungsweg 32 ausgebildet, der die Luftabführungsöffnung 26 mit der Luftzuführungsöffnung 24 strömungstechnisch verbindet. Dabei ist der Luftführungsweg 32 als Teil eines Luftpolsters 33 ausgebildet, das in Höhenrichtung oberhalb des Wasserspiegels des vom Tank 16 bevorrateten Wassers 21 ausgebildet ist. Wie Fig. 1 ferner erkennen lässt, ist ein Abschnitt der Rohrschlange 22 des Verdampfers 13 nicht vom Wasser 21 umspült, sondern innerhalb des Luftpolsters oberhalb des Wasserspielgels 34 des Wassers 21 im Luftführungsweg 32 angeordnet. Im Betriebsfall drückt die Ventilatoreinheit 29 Umgebungsluft 27 durch den Luftführungsweg 32 des Tanks 16 hindurch, wodurch der entsprechende Abschnitt der Rohrschlange 22 luftumspült ist.

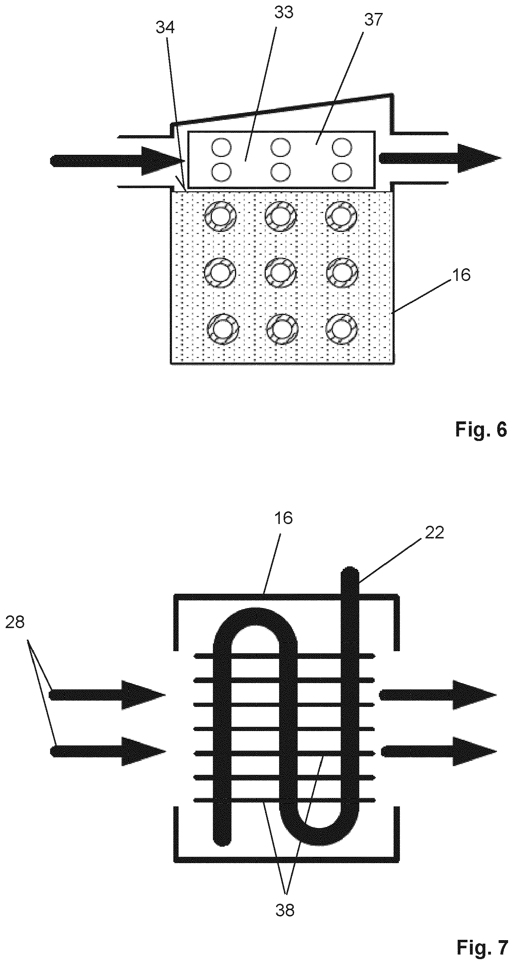

Infolge der erfindungsgemäßen Ausgestaltung ergeben sich zwei Temperaturzonen, und zwar eine Wassertemperaturzone einerseits und eine Lufttemperaturzone andererseits. Im bestimmungsgemäßen Verwendungsfall wird dem vom Tank 16 bevorrateten Wasser 21 Wärmeenergie entzogen, die auf das durch die Rohrschlange 22 hindurchgeführte Arbeitsmittel übertragen wird. Infolge dessen kühlt das Wasser 21 aus, womit die Lufttemperaturzone oberhalb des Wassers 21 stets auf einem höheren Temperaturniveau ist als die Wassertemperaturzone. Durch diese höhere Temperatur innerhalb der Lufttemperaturzone ist eine bestimmungsgemäße Überhitzung des Arbeitsmittels sichergestellt, womit auch gewährleistet ist, dass dem in Strömungsrichtung des Arbeitsmittels nachgeschalteten Verdichter nur vollständig verdampftes Arbeitsmittel zugeführt wird. Insofern bildet die Lufttemperaturzone oberhalb des Wasserspiegels 34 eine Überhitzungszone 37 aus, wie dies auch in Fig. 6 beispielshaft eingezeichnet ist.

Gemäß der Ausführungsform nach Fig. 1 wird die Ventilatoreinheit 29 im Saugbetrieb betrieben, so dass die Luft 27 frontseitig der Geschirrspülmaschine angesaugt und rückseitig abgegeben wird.

Die Ausführungsform nach Fig. 2 unterscheidet sich von derjenigen nach Fig. 1 dadurch, dass die Ventilatoreinheit 29 in umgekehrter Richtung betrieben wird, so dass die Luft 27 rückseitig der Geschirrspülmaschine angesaugt und frontseitig abgegeben wird. Der sich einstellende Effekt der Überhitzungszone 37 ist aber identisch.

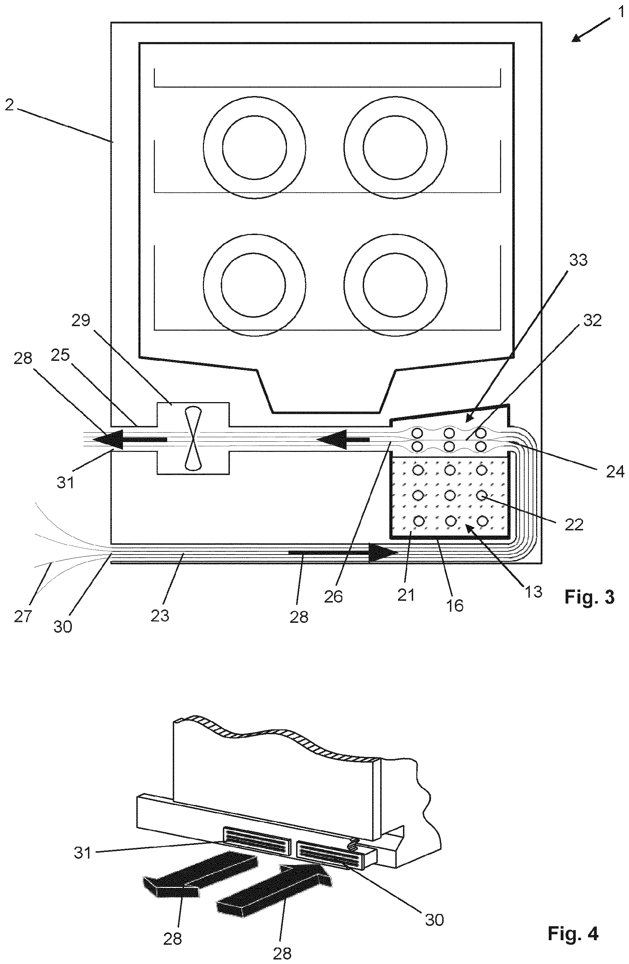

Die Figuren 3 und 4 zeigen eine zu den Figuren 1 und 2 insoweit abgewandelte Ausführungsform, als dass die Luft sowohl frontseitig angesogen als auch frontseitig abgegeben wird. Es ist aber auch eine Konstruktion möglich, bei der die Luft sowohl rückseitig angesogen als auch rückseitig abgegeben wird.

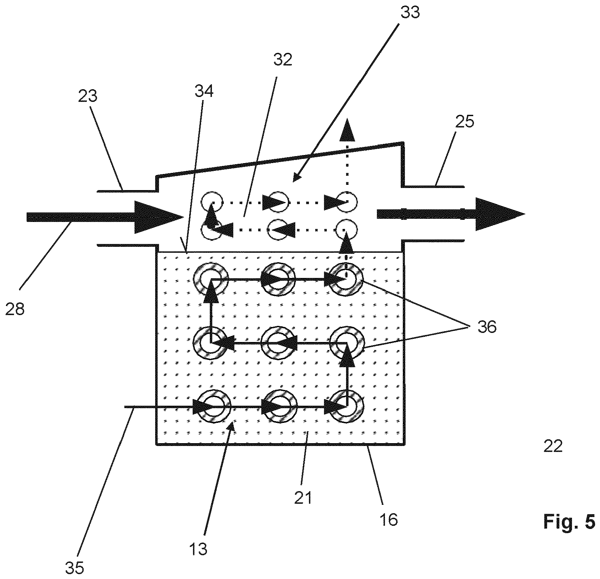

Fig. 5 lässt in einer schematischen Darstellung den Verdampfer 13 samt seiner Rohrschlange 22 im Detail erkennen. Wie der Pfeil 35 erkennen lässt, durchströmt das Arbeitsmittel die Rohrschlange 22 im bestimmungsgemäßen Verwendungsfall von unten nach oben. Dabei kommt es zu einer Abkühlung des Wassers 21, was zur Ausbildung von Eisschichten 36 auf der Rohrschlange 22 führen kann. Der oberhalb des Wasserspiegels 34 befindliche Abschnitt der Rohrschlange 22 ist indes eisfrei, weil sich dieser im Luftführungsweg 32 befindet, der in Entsprechung des Pfeils 28 mit Umgebungsluft beaufschlagt wird, die Raumtemperatur aufweist.

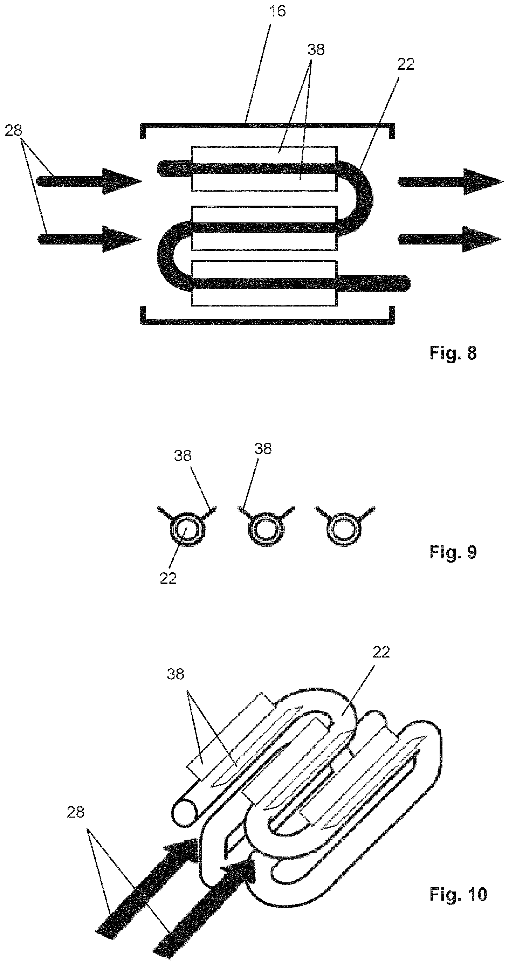

Um einen Wärmeeintrag in das Arbeitsmittel aus dem Wasser zu erhöhen, kann die Rohrschlange 22 mit Lamellen 38 besetzt sein. Dabei ist eine Querausrichtung möglich, wie in Fig. 7 gezeigt, die insbesondere eine schematische Ansicht des Tanks von Fig. 6 von oben darstellt, oder eine Längsausrichtung, wie dies die Figuren 8, 9 und 10 erkennen lassen.

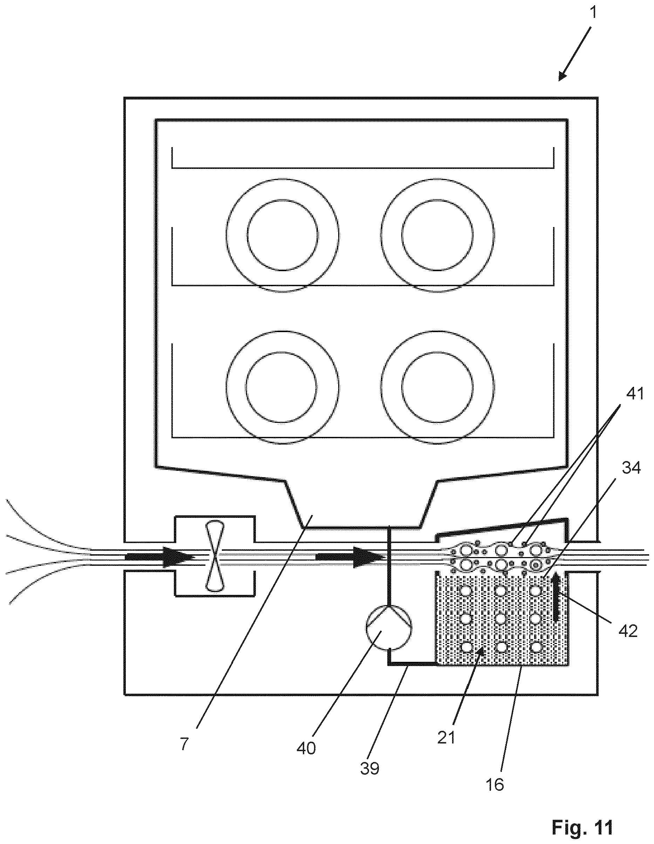

Fig. 11 zeigt eine weitere Ausführungsform. Dergemäß ist eine Verbindungsleitung 39 vorgesehen, die den Tank 16 strömungstechnisch mit dem Sammeltopf 7 koppelt. In die Verbindungsleitung 39 ist eine Pumpe 40 integriert, die es gestattet, Wasser 21 aus dem Tank 16 abzupumpen und in den Sammeltopf 7 zu fördern.

Mittels der Pumpe 40 ist eine Einstellung des Wasserspiegels 34 des vom Tank 16 bevorrateten Wassers 21 möglich. Dies ist deshalb von Vorteil, weil es im bestimmungsgemäßen Anwendungsfall zu Kondensationsdefekten kommen kann. Insbesondere kann Feuchtigkeit aus der angesogenen Luft an der Rohrschlang 22 kondensieren, womit sich hier Kondensat 21 bildet. In Entsprechung des Pfeils 42 führt dies zu einem Anstieg des Wasserspiegels 34. Um den Wasserspiegel 34 konstant zu halten, ist von Zeit zu Zeit überschüssiges Wasser 21 mittels der Pumpe 40 abzupumpen.

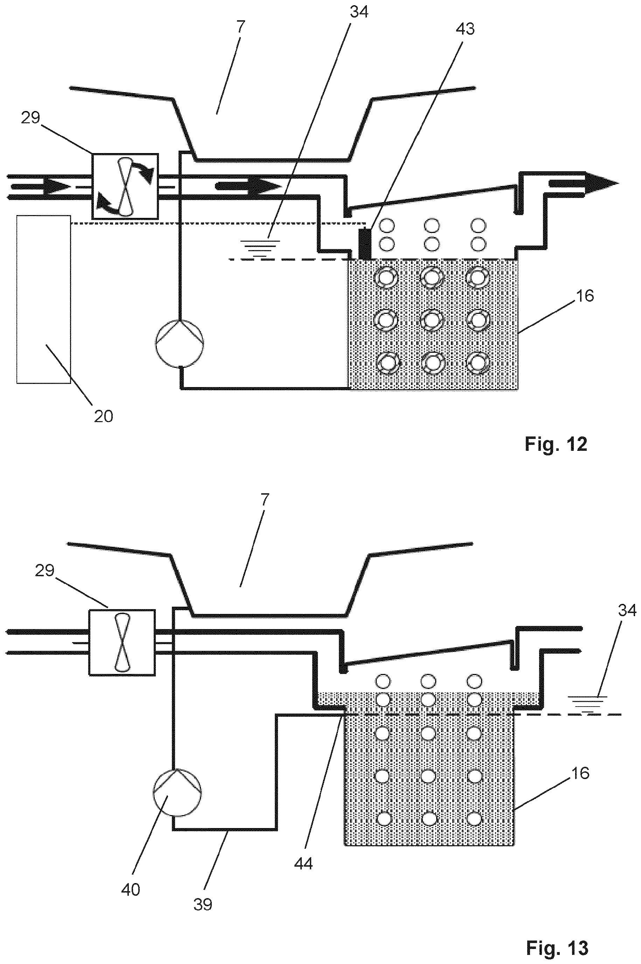

Um den Wasserspiegel 34 sicher sensieren zu können, ist gemäß dem Ausführungsbeispiel nach Fig. 12 ein entsprechender Sensor 43 vorgesehen. Sobald mittels dieses Sensors 43 ein zu hoher Wasserstand 34 detektiert wird, erfolgt ein Abpumpen von Wasser 21 mittels der Pumpe 40.

Fig. 13 lässt eine alternative Ausführungsform erkennen, wonach anstelle eines Sensors 43 ein Überlauf 44 vorgesehen ist. Dieser stellt ein automatisches Abfließen von Wasser 21 sicher, sobald ein Wasserpegelhöchststand erreicht ist. Diese Anordnung ermöglicht auch eine einfache Zeitsteuerung der Pumpe 40. Hierdurch kann auf einen zusätzlichen Füllstandssensor verzichtet werden.

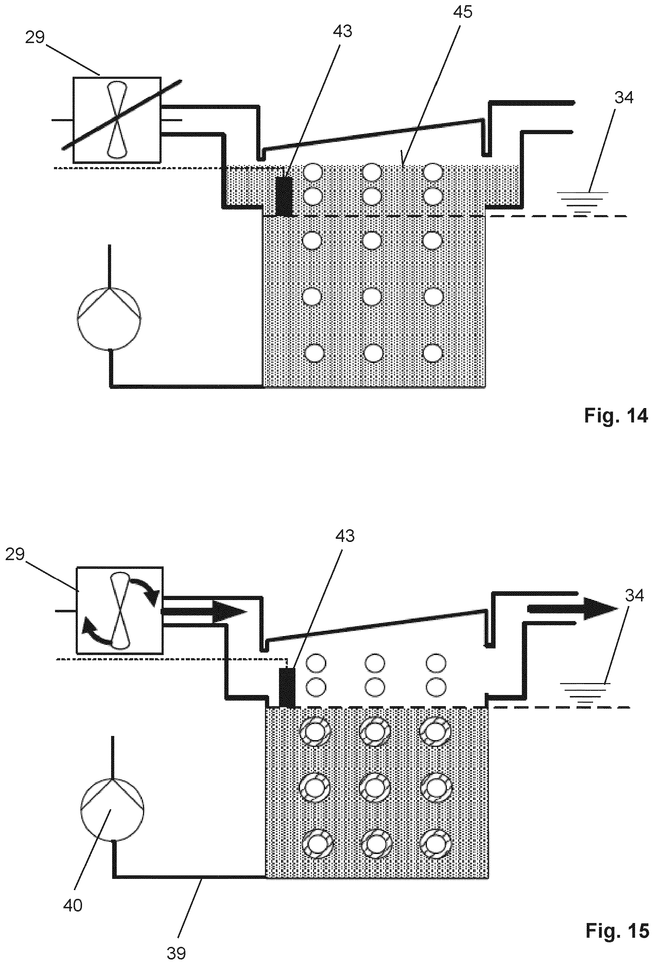

Eine weitere Ausführungsform zeigen die Figuren 14 und 15. Gemäß dieser Ausführungsform ist vorgesehen, den oberhalb des Wasserspiegels 34 vorgesehenen Volumenraum gezielt zu fluten, bis der erhöhte Wasserspiegel 45 erreicht ist. Sobald dann im weiteren Betrieb der Wärmepumpeneinrichtung 9 das Wasser 21 soweit abgekühlt wird, dass sich eine Eisschicht um die Rohrschlange 22 herum bildet, wird durch Abpumpen des Wassers 21 der Wasserspiegel wieder so weit gesenkt, bis der Wasserspiegel 34 erreicht ist, wie in Fig. 15 gezeigt.

Die Einstellung des Wasserspiegels in vorbeschriebener Weise hat den Vorteil, dass zu Beginn eines Betriebs der Wärmepumpeneinrichtung die Rohrschlange 22 über ihre gesamte wirksame Länge am Wärmeübertragungsprozess beteiligt ist. Sobald dann im weiteren Verlauf die Wassertemperatur so weit abgekühlt ist, dass eine sichere Überhitzung des Kältemittels nicht mehr gewährleistet ist, erfolgt eine Absenkung des Wasserspiegels, so dass in schon vorbeschriebener Weise ein Abschnitt der Rohrschlange 22 im luftdurchspülten Luftführungsweg 32 zu liegen kommt.

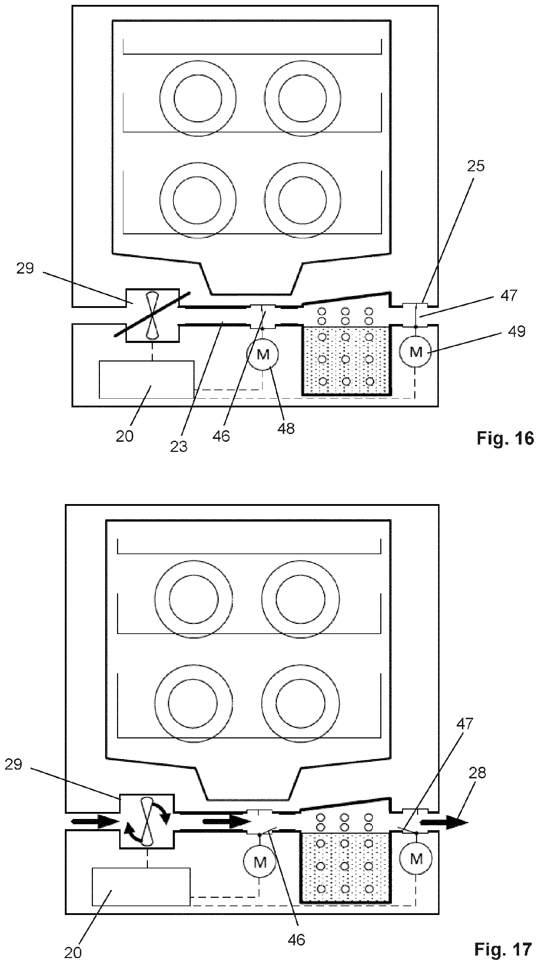

Gemäß einer weiteren Ausführungsform der Erfindung sind sowohl im Luftzuführungskanal 23 als auch im Luftabführungskanal 25 Verschlussklappen 46 bzw. 47 vorgesehen, mittels denen eine Luftführung wahlweise ermöglicht bzw. unterbunden ist. Die Verschlussklappen 46 und 47 sind bevorzugter Weise motorgetrieben, zu welchem Zweck die Motoren 48 bzw. 49 vorgesehen sind. Fig. 16 zeigt dabei den geschlossenen Zustand, wohingegen Fig. 17 den geöffneten Zustand zeigt.

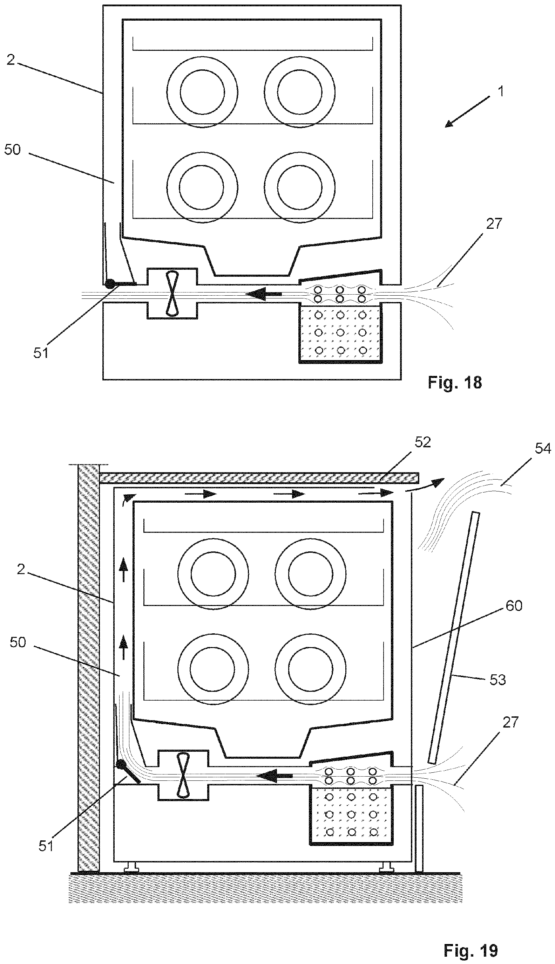

Gemäß der Ausführungsform nach den Figuren 18 und 19 kommt ein Abzweigungskanal 50 zum Einsatz, der unter Zwischenordnung einer Verschlussklappe 51 strömungstechnisch an den Luftabführungskanal 25 angeschlossen ist. Bei geschlossener Verschlussklappe 51 erfolgt ein Betrieb, wie schon vorstehend anhand von Fig. 2 beschrieben.

Bei geöffneter Verschlussklappe 51 erfolgt eine Umlenkung der angesogenen Luft 27 in den Abzweigungskanal 50, wobei dieser ausgangsseitig unterhalb einer Arbeitsplatte 52 mündet, mithin oberhalb einer durch die Spülraumtür 53 verschließbaren Beschickungsöffnung 60. Bei geöffneter Spülraumtür 53, wie in Fig. 19 gezeigt, können über die Beschickungsöffnung 60 dem Spülraum noch heiße Brüden 54 entweichen, was zu Kondensationseffekten unterhalb der Arbeitsplatte 52 führen kann. Eine Umlenkung der Luft 27 über den Abzweigungskanal 50 schafft hier Abhilfe, weil hierdurch einerseits eine Vorwärmung der Arbeitsplatte 52 bewirkt werden kann, als auch andererseits eine Verdünnung der Brüden 54 erreicht ist.

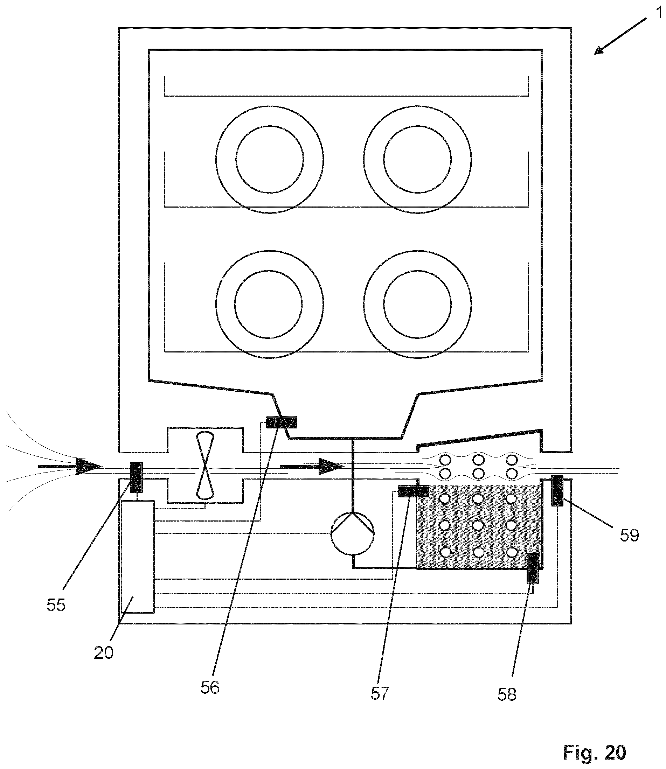

Fig. 20 lässt schließlich noch erkennen, dass die Steuerung 20 mit einer Vielzahl von Sensoren gekoppelt sein kann. Denkbar sind unter anderem ein Sensor 55 zur Erfassung einer dem Lufteingangsstrom zugeordneten Messgröße, insbesondere dessen Temperatur, ein Sensor 56 zur Füllstands- und/oder Temperaturmessung und/oder Druckmessung innerhalb des Sammeltopfs 7, ein Sensor 57 zur Füllstands- und/oder Temperaturmessung innerhalb des Tanks 16, ein Sensor 58 zur Erfassung der Temperatur des Wassers 21 und/ oder des Drucks im Tank 16, sowie ein Sensor 59 zur Erfassung einer dem Luftabgabestrom zugeordneten Messgröße, insbesondere dessen Temperatur.

Sind etwa Sensoren 55 und 59 vorhanden und als Temperatursensoren ausgebildet, so sind beispielsweise folgende Verfahrensausprägungen möglich. Die Steuereinrichtung kann anhand der erfassten Temperaturen die durch das Durchströmen des Tanks bewirkte Temperaturabsenkung des Luftstroms bestimmen und abhängig von der Temperatusabsenkung die Gebläseleistung und damit den Luftvolumenstrom einstellen. So kann insbesondere bei steigender Temperaturabsenkung eine höhere Gebläseleistung vorgesehen sein. Auf diese Weise lässt sich die Höhe des Volumenstroms bedarfsabhängig optimieren und damit auch der Energieverbrauch und die Geräuschbelastung begrenzen. Außerdem kann durch diese Maßnahme der Einfluss unterschiedlicher Einbausituationenen ausgeglichen werden. Anhand der Erfassung der durch das Durchströmen des Tanks bewirkten Temperatusabsenkung kann darüber hinaus auch auf die Temperatur im Tank geschlossen und damit ein Regenerationsgrad bzw. Vereisungsgrad des Tanks bestimmt werden. Auf einen Temperatussensor im Tank kann somit verzichtet werden. Insbesondere kann bei Überschreiten eines vorgebbaren Schwellwertes für die Temperaturabsenkung vorgesehen sein, dass das Spülprogramm ohne Betrieb der Wärmepumpe erfolgt bzw. fortgesetzt wird, die Wärmepumpe im Spülprogramm somit ausgestellt wird oder bleibt. Zur Erwärmung der Spülflotte wird in diesem Fall stattdessen eine andere, konventionelle Heizungseinrichtung eingesetzt.

**Bezugszeichen**

| | | | |
|---|---|---|---|
| 1 | Geschirrspülmaschine | 33 | Luftpolster |
| 2 | Gehäuse | 34 | Wasserspiegel |
| 3 | Spülbehälter | 35 | Pfeil (Arbeitsmittel) |
| 4 | Spülraum | 36 | Eisschicht |
| 5 | Spülgut | 37 | Überhitzungszone |
| 6 | Spülkorb | 38 | Lamelle |
| 7 | Sammeltopf | 39 | Verbindungsleitung |
| 8 | Umwälzpumpe | 40 | Pumpe |
| 9 | Wärmepumpeneinrichtung | 41 | Kondensat |
| 10 | Verdichter | 42 | Pfeil |
| 11 | Verflüssiger | 43 | Sensor |
| 12 | Expansionsorgan | 44 | Überlauf |
| 13 | Verdampfer | 45 | Wasserspiegel |
| 14 | Strömungskreislauf | 46 | Verschlussklappe |
| | (der Wärmepumpeneinrichtung) | 47 | Verschlussklappe |
| 15 | Umwälzkreislauf (Spülflotte) | 48 | Motor |
| 16 | Tank | 49 | Motor |
| 17 | Frischwasserleitung | 50 | Abzweigungskanal |
| 18 | Pumpe | 51 | Verschlussklappe |
| 19 | Abwasserleitung | 52 | Arbeitsplatte |
| 20 | Steuerung | 53 | Spülraumtür |
| 21 | Wasser | 54 | Drüden |
| 22 | Rohrschlange | 55 | Sensor |
| 23 | Luftzuführungskanal | 56 | Sensor |
| 24 | Luftzuführungsöffnung | 57 | Sensor |
| 25 | Luftabführungskanal | 58 | Sensor |
| 26 | Luftabführungsöffnung | 59 | Sensor |
| 27 | Luft | 60 | Beschickungsöffnung |
| 28 | Pfeil | | |
| 29 | Ventilatoreinheit | | |
| 30 | Eingangsöffnung | | |
| 31 | Ausgangsöffnung | | |
| 32 | Luftführungsweg | | |

## Patentansprüche

1. Geschirrspülmaschine, insbesondere Haushaltsgeschirrspülmaschine, mit einem einen Spülraum (4) bereitstellenden Spülbehälter (3), der der Aufnahme von zu reinigendem Spülgut (5) dient, und einer Wärmepumpeneinrichtung (9) mit einem Verdampfer (13), der eine von einem Arbeitsmittel durchströmbare Rohrschlange (22) aufweist, die innerhalb eines mit Wasser (21) befüllten Tanks (16) angeordnet ist, wobei die Rohrschlange (22) im Betriebsfall mit einem ersten Abschnitt innerhalb des Wassers angeordnet ist, und wobei der Tank (16) eine an einen Luftzuführungskanal (23) angeschlossene Luftzuführungsöffnung (24) und eine an einen Luftabführungskanal (25) angeschlossene Luftabführungsöffnung (26) aufweist, wobei ein sich innerhalb des Tanks (16) erstreckender Luftführungsweg (32) vorgesehen ist, der die Luftabführungsöffnung (26) mit der Luftzuführungsöffnung (24) strömungstechnisch verbindet,
**dadurch gekennzeichnet,**
**dass** die Rohrschlange (22) einen zweiten im Betriebsfall innerhalb des Luftführungswegs (32) angeordneten Abschnitt aufweist.

2. Geschirrspülmaschine nach Anspruch 1,
**dadurch gekennzeichnet,**
**dass** der Luftführungsweg (32) ein Luftpolster (33) oberhalb des vom im Tank (16) bevorrateten Wasser (21) bereitgestellten Wasserspiegels (34) ist.

3. Geschirrspülmaschine nach Anspruch 1 oder 2,
**dadurch gekennzeichnet,**
**dass** der Tank (16) einen die Höhe des Wasserspiegels (34) des vom Tank (16) bevorrateten Wassers (21) begrenzenden Überlauf (44) aufweist.

4. Geschirrspülmaschine nach einem der vorhergehenden Ansprüche,
**dadurch gekennzeichnet,**
**dass** die Höhe des Wasserspiegels (34) des vom Tank (16) bevorrateten Wassers (21) variabel einstellbar ist.

5. Geschirrspülmaschine nach einem der vorhergehenden Ansprüche,
**gekennzeichnet durch**
einen Sensor (43) zur Detektion der Höhe des Wasserspiegels (34) des vom Tank (16) bevorrateten Wassers (21).

6. Geschirrspülmaschine nach einem der der vorhergehenden Ansprüche,
**dadurch gekennzeichnet,**
**dass** der Tank (16) an eine Wasserpumpe (40) strömungstechnisch angeschlossen ist.

7. Geschirrspülmaschine nach einem der der vorhergehenden Ansprüche,
**gekennzeichnet durch**
eine mit dem Luftzuführungskanal (23) und/oder dem Luftabführungskanal (25) in strömungstechnischer Wirkverbindung stehende Ventilatoreinheit (29).

8. Geschirrspülmaschinen nach einem der vorhergehenden Ansprüche,
**dadurch gekennzeichnet,**
**dass** der Luftzuführungskanal (23) eingangsseitig eine Öffnung (30) bereitstellt, die frontseitig oder rückseitig der Geschirrspülmaschine (1) ausgebildet ist.

9. Geschirrspülmaschine nach einem der vorhergehenden Ansprüche,
**dadurch gekennzeichnet,**
**dass** der Luftabführungskanal (25) ausgangsseitig eine Öffnung (31) bereitstellt, die frontseitig oder rückseitig der Geschirrspülmaschine (1) ausgebildet ist.

10. Geschirrspülmaschine nach einem der vorhergehenden Ansprüche,
**gekennzeichnet durch**
einen an den Luftabführungskanal (25) strömungstechnisch angeschlossenen Abzweigungskanal (50).

11. Geschirrspülmaschine nach Anspruch 10,
**dadurch gekennzeichnet,**
**dass** der Abzweigungskanal (50) ausgangsseitig eine Öffnung aufweist, die oberseitig einer frontseitig der Geschirrspülmaschine (1) vom Spülraum (4) bereitgestellten Beschickungsöffnung (60) ausgebildet ist.

12. Geschirrspülmaschine nach Anspruch 10 oder 11,
**gekennzeichnet durch**
eine wahlweise verstellbare Verschlussklappe (51) zum Öffnen und/oder Schließen des Abzweigungskanals (50).

13. Verfahren zum Betrieb einer Geschirrspülmaschine nach einem der vorhergehenden Ansprüche 1 bis 12, bei dem im Betriebsfall der Wärmepumpeneinrichtung (9) dem Tank (16) Luft zugeführt und entlang des Luftführungswegs (32) oberhalb des Wasserspielgels (34) des vom Tank (16) bevorrateten Wassers (21) durch den Tank (16) geleitet wird.

14. Verfahren nach Anspruch 13,
**dadurch gekennzeichnet,**
**dass** der Wasserspiegel (34) vor einer Beaufschlagung des Tanks (16) mit Luft zur Freigabe des Luftführungswegs (32) abgesenkt wird.

15. Verfahren nach Anspruch 14,
**dadurch gekennzeichnet,**
**dass** die Höhe des Wasserspiegels (34) des vom Tank (16) bevorrateten Wassers (21) sensiert wird.

## Claims

1. Dishwasher, in particular a domestic dishwasher, having a washing container (3) which provides a washing chamber (4) and is used to accommodate washware (5) to be washed, and a heat pump device (9) having an evaporator (13) which has a pipe coil (22) through which a working agent can flow and which is arranged within a reservoir (16) filled with water (21), the pipe coil (22) being arranged having a first portion thereof within the water during operation, and
the reservoir (16) having an air supply opening (24) connected to an air supply channel (23) and an air discharge opening (26) connected to an air discharge channel (25), an air guide path (32) being provided which extends within the reservoir (16) and fluidically connects the air discharge opening (26) to the air supply opening (24),
**characterised in that**
the pipe coil (22) has a second portion arranged within the air guide path (32) during operation.

2. Dishwasher according to claim 1,
**characterised in that**
the air guide path (32) is an air cushion (33) above the water level (34) provided by the water (21) stored in the reservoir (16).

3. Dishwasher according to claim 1 or 2,
**characterised in that**
the reservoir (16) has an overflow (44) which delimits the height of the water level (34) of the water (21) stored by the reservoir (16).

4. Dishwasher according to any of the preceding claims,
**characterised in that**
the height of the water level (34) of the water (21) stored by the reservoir (16) can be variably adjusted.

5. Dishwasher according to any of the preceding claims,
**characterised by**
a sensor (43) for detecting the height of the water level (34) of the water (21) stored by the reservoir (16).

6. Dishwasher according to any of the preceding claims,
**characterised in that**
the reservoir (16) is fluidically connected to a water pump (40).

7. Dishwasher according to any of the preceding claims,
**characterised by**
a ventilator unit (29) in fluidic operative connection to the air supply channel (23) and/or to the air discharge channel (25).

8. Dishwasher according to any of the preceding claims,
**characterised in that**
the air supply channel (23) provides an opening (30) on the inlet side, the opening being formed on the front side or rear side of the dishwasher (1).

9. Dishwasher according to any of the preceding claims,
**characterised in that**
the air discharge channel (25) provides an opening (31) on the outlet side, the opening being formed on the front side or rear side of the dishwasher (1).

10. Dishwasher according to any of the preceding claims,
**characterised by**
a branching channel (50) which is fluidically connected to the air discharge channel (25).

11. Dishwasher according to claim 10,
**characterised in that**
the branching channel (50) has an opening on the outlet side which is formed on the upper side of a loading opening (60) provided by the washing chamber (4) on the front side of the dishwasher (1).

12. Dishwasher according to claim 10 or 11,
**characterised by**
an optionally adjustable closure flap (51) for opening and/or closing the branching channel (50).

13. Method for operating a dishwasher according to any of preceding claims 1 to 12, in which, while the heat pump device (9) is in operation, air is supplied to the reservoir (16) and is conducted through the reservoir (16) along the air guide path (32) above the water level (34) of the water (21) stored by said reservoir (16).

14. Method according to claim 13,
**characterised in that**
the water level (34) is lowered before the reservoir (16) is acted upon by air in order to clear the air guidance path (32).

15. Method according to claim 14,
**characterised in that**
the height of the water level (34) of the water (21) stored by the reservoir (16) is detected.

## Revendications

1. Lave-vaisselle, en particulier lave-vaisselle électroménager, comportant un récipient de lavage (3) fournissant un espace de lavage (4) et servant à la réception d'articles à laver (5), et un dispositif de pompe à chaleur (9) comportant un évaporateur (13) qui présente un serpentin (22) pouvant être traversé par un fluide de travail, lequel serpentin est disposé à l'intérieur d'un réservoir (16) rempli d'eau (21), dans lequel, lors du fonctionnement, le serpentin (22) est disposé avec une première section dans l'eau, et
dans lequel le réservoir (16) présente une ouverture d'amenée d'air (24) raccordée à un canal d'amenée d'air (23) et une ouverture d'évacuation d'air (26) raccordée à un canal d'évacuation d'air (25), dans lequel un chemin de guidage d'air (32) s'étendant à l'intérieur du réservoir (16) est prévu, lequel chemin relie l'ouverture d'évacuation d'air (26) à l'ouverture d'amenée d'air (24) par communication fluidique,
**caractérisé en ce que** le serpentin (22) présente une seconde section disposée à l'intérieur du chemin de guidage d'air (32) lors du fonctionnement.

2. Lave-vaisselle selon la revendication 1,
**caractérisé en ce que** le chemin de guidage d'air (32) est un coussin d'air (33) au-dessus du niveau d'eau (34) fourni par l'eau (21) stockée dans le réservoir (16).

3. Lave-vaisselle selon la revendication 1 ou 2,
**caractérisé en ce que** le réservoir (16) présente un déversoir (44) limitant la hauteur du niveau d'eau (34) de l'eau (21) stockée par le réservoir (16).

4. Lave-vaisselle selon l'une des revendications précédentes,
**caractérisé en ce que** la hauteur du niveau d'eau (34) de l'eau (21) stockée par le réservoir (16) est réglable de manière variable.

5. Lave-vaisselle selon l'une des revendications précédentes,
**caractérisé par**
un capteur (43) pour la détection de la hauteur du niveau d'eau (34) de l'eau (21) stockée par le réservoir (16).

6. Lave-vaisselle selon l'une des revendications précédentes,
**caractérisé en ce que** le réservoir (16) est raccordé à une pompe à eau (40) par communication fluidique.

7. Lave-vaisselle selon l'une des revendications précédentes,
**caractérisé par**
une unité formant ventilateur (29) en liaison fonctionnelle par communication fluidique avec le canal d'amenée d'air (23) et/ou le canal d'évacuation d'air (25).

8. Lave-vaisselle selon l'une des revendications précédentes,
**caractérisé en ce que** le canal d'amenée d'air (23) fournit côté entrée une ouverture (30) qui est réalisée côté avant ou côté arrière du lave-vaisselle (1).

9. Lave-vaisselle selon l'une des revendications précédentes,
**caractérisé en ce que** le canal d'évacuation d'air (25) fournit côté sortie une ouverture (31) qui est réalisée côté avant ou côté arrière du lave-vaisselle (1).

10. Lave-vaisselle selon l'une des revendications précédentes,
**caractérisé par**
un canal de dérivation (50) raccordé par communication fluidique au canal d'évacuation d'air (25).

11. Lave-vaisselle selon la revendication 10,
**caractérisé en ce que** le canal de dérivation (50) présente côté sortie une ouverture qui est réalisée côté supérieur d'une ouverture d'alimentation (60) fournie côté avant du lave-vaisselle (1) par l'espace de lavage (4).

12. Lave-vaisselle selon la revendication 10 ou 11,
**caractérisé par**
un volet de fermeture (51) réglable au choix pour l'ouverture et/ou la fermeture du canal de dérivation (50).

13. Procédé permettant de faire fonctionner un lave-vaisselle selon l'une des revendications précédentes 1 à 12, dans lequel, lors du fonctionnement du dispositif de pompe à chaleur (9), de l'air est amené au réservoir (16) et est conduit à travers le réservoir (16) le long du chemin de guidage d'air (32) au-dessus du niveau d'eau (34) de l'eau (21) stockée par le réservoir (16).

14. Procédé selon la revendication 13,
**caractérisé en ce que** le niveau d'eau (34) est abaissé avant que le réservoir (16) ne soit alimenté en air pour libérer le chemin de guidage d'air (32).

15. Procédé selon la revendication 14,
**caractérisé en ce que** la hauteur du niveau d'eau (34) de l'eau (21) stockée par le réservoir (16) est détectée.
